# EUROPÄISCHE PATENTSCHRIFT

(11) **EP 3 374 625 B1**
(45) Veröffentlichungstag und Bekanntmachung des Hinweises auf die Patenterteilung: **18.09.2019**
(21) Anmeldenummer: 16770275.2
(22) Anmeldetag: 22.09.2016
(51) Int. Cl.: F16K 31/06, F02M 59/36, F02M 59/46, F02M 59/48, F02M 63/00

(54) **ELEKTROMAGNETISCH ANSTEUERBARES SAUGVENTIL FÜR EINE HOCHDRUCKPUMPE, HOCHDRUCKPUMPE**
ELECTROMAGNETICALLY ACTUATABLE INTAKE VALVE FOR A HIGH-PRESSURE PUMP, AND HIGH-PRESSURE PUMP
SOUPAPE D'ASPIRATION À COMMANDE ÉLECTROMAGNÉTIQUE POUR POMPE À HAUTE PRESSION ET POMPE À HAUTE PRESSION

(30) Priorität: 10.11.2015 DE 102015222091
(43) Veröffentlichungstag der Anmeldung: 19.09.2018
(73) Patentinhaber: Robert Bosch GmbH, 70442 Stuttgart (DE)
(72) Erfinder: CICHON, Gabriel, 71638 Ludwigsburg (DE)
(86) Internationale Anmeldenummer: PCT/EP2016/072597
(87) Internationale Veröffentlichungsnummer: WO 2017/080707

(56) Entgegenhaltungen:
- DE-A1-102011 086 249
- DE-A1-102014 200 339
- DE-A1-102014 201 101

## Beschreibung

Die Erfindung betrifft ein elektromagnetisch ansteuerbares Saugventil für eine Hochdruckpumpe eines Kraftstoffeinspritzsystems, insbesondere eines Common-Rail-Einspritzsystems, mit den Merkmalen des Oberbegriffs des Anspruchs 1. Ferner betrifft die Erfindung eine Hochdruckpumpe für ein Kraftstoffeinspritzsystem, insbesondere ein Common-Rail-Einspritzsystem, mit einem solchen Saugventil.

### Stand der Technik

Aus der DE 10 2014 200 339 A1 ist ein elektromagnetisch ansteuerbares Saugventil für eine Hochdruckpumpe eines Kraftstoffeinspritzsystems, insbesondere eines Common-Rail-Einspritzsystems, bekannt, das eine ringförmige Magnetspule zum Einwirken auf einen hubbeweglichen Anker und einen Polkern umfasst, der gemeinsam mit dem Anker einen Arbeitsluftspalt begrenzt. Der Polkern dient somit als Hubanschlag für den Anker. Beim Anschlagen des Ankers am Polkern wirken auf den Polkern hohe Anschlagkräfte. Diese werden über mit dem Polkern verbundene Bauteile auf ein Gehäuse einer Hochdruckpumpe übertragen, in welche das Saugventil eingesetzt und mittels einer Ventilschraube fixiert ist. Denn der Polkern ist mit der Ventilschraube über eine Hülse verbunden, die mit beiden Bauteilen fluiddicht verschweißt ist. Da die Anschlagkräfte hohe Werte annehmen können, besteht die Gefahr, dass die Schweißverbindungen vorzeitig versagen und zu Undichtigkeiten und/oder den Funktionsverlust des Saugventils führen. Um dem entgegen zu wirken, wird in der DE 10 2014 200 339 A1 vorgeschlagen, den Polkern in Richtung des Ankers axial vorzuspannen. Auf diese Weise sollen die Schweißnaht, über welche der Polkern mit der Hülse verbunden ist, entlastet und die Robustheit des Saugventils gesteigert werden.

Ausgehend von dem vorstehend genannten Stand der Technik liegt der vorliegenden Erfindung die Aufgabe zugrunde, ein elektromagnetisch ansteuerbares Saugventil anzugeben, dessen Robustheit weiter gesteigert ist.

Zur Lösung der Aufgabe wird das elektromagnetisch ansteuerbare Saugventil mit den Merkmalen des Anspruchs 1 vorgeschlagen. Vorteilhafte Weiterbildungen der Erfindung sind den Unteransprüchen zu entnehmen. Ferner wird eine Hochdruckpumpe mit einem solchen Saugventil vorgeschlagen.

### Offenbarung der Erfindung

Das für eine Hochdruckpumpe eines Kraftstoffeinspritzsystems, insbesondere eines Common-Rail-Einspritzsystems, vorgeschlagene elektromagnetisch ansteuerbare Saugventil umfasst eine Magnetspule zur Einwirkung auf einen Anker, der in einer zentralen Ausnehmung eines Ventilkörpers hubbeweglich aufgenommen und geführt ist. Dem Anker liegt dabei an einem Arbeitsluftspalt ein Polkern gegenüber, der über eine Hülse mit dem Ventilkörper verbunden ist. Erfindungsgemäß weist der Ventilkörper innerhalb einer die Ausnehmung begrenzenden Innenumfangsfläche eine umlaufende Aussparung auf, welche die Innenumfangsfläche in einen oberen und einen unteren Führungsbereich unterteilt.

Durch die Unterteilung der Innenumfangsfläche in einen oberen und einen unteren Führungsbereich wird eine verbesserte Führung des Ankers erreicht. Diese wirkt insbesondere einer Ankerschiefstellung entgegen. Doch selbst bei einer leichten Schieflage des Ankers wird dieser über zwei diametral gegenüberliegende Lagerpunkte an seinen beiden Enden geführt. Ein erster oberer Lagerpunkt befindet sich im oberen Führungsbereich und der zweite Lagerpunkt befindet sich im unteren Führungsbereich, so dass ein maximaler Lagerpunktabstand erreicht wird. Durch die verbesserte Führung und damit einhergehende verminderte Schiefstellung des Ankers wird ferner der Verschleiß im Kontaktbereich zwischen dem Anker und dem Ventilkörper reduziert. Darüber hinaus wird der Verschleiß im Bereich der Anschlagflächen des Ankers bzw. seiner Kontaktpartner verringert. Der verringerte Verschleiß wirkt sich positiv auf die Robustheit des Saugventils aus.

Darüber hinaus können über die verbesserte Führung und der damit einhergehenden verminderten Schiefstellung des Ankers unerwünschte Schwankungen des Ankerhubs minimiert werden. Dies wiederum wirkt sich positiv auf die Funktionssicherheit des Saugventils aus.

Bevorzugt ist die Hülse, welche den Polkern und den Ventilkörper verbindet, sowohl mit dem Polkern als auch mit dem Ventilkörper verschweißt. Die Schweißverbindung wird vorzugsweise durch jeweils eine umlaufende Schweißnaht erreicht, so dass zugleich eine Abdichtung bewirkt wird. Um beim Setzen der Schweißnaht ein Verziehen des Ventilkörpers zu verhindern, ist die Hülse mit dem Ventilkörper auf Höhe der umlaufenden Aussparung verschweißt. Da der Ventilkörper im Bereich der Aussparung keinen Kontakt zum Anker hat, kann eine Beeinflussung der Ankerführung durch die Schweißnaht bzw. durch einen Schweißnahtaufwurf verhindert oder zumindest verringert werden.

Weiterhin bevorzugt ist die umlaufende Aussparung im Ventilkörper als Ringnut ausgebildet, deren Querschnittsabmessung in axialer Richtung größer als in radialer Richtung ist. Die Abmessung in radialer Richtung sollte derart bemessen sein, dass ein Schweißnahtaufwurf einer im Bereich der Aussparung gesetzten Schweißnaht nicht in den Führungsdurchmesser der zentralen Ausnehmung des Ventilkörpers hineinragt. Analog ist vorzugsweise die Abmessung der Aussparung in axialer Richtung derart gewählt, dass sie größer als eine Schweißnahteinflussbreite ist, um jeglichen Einfluss der Schweißnaht auf die Führung des Ankers zu verhindern.

Die als Ringnut ausgebildete Aussparung bildet zugleich eine Art Schmiermitteldepot aus, die im Betrieb des Saugventils stets mit Kraftstoff gefüllt ist. Der in der Aussparung vorhandene Kraftstoff unterstützt die Schmierung des Ankers im Bereich seiner Lagerung. Insofern wirkt sich eine vergleichsweise große Abmessung in axialer Richtung günstig in Bezug auf die angestrebte Verschleißminderung im Lagerbereich aus.

Vorzugsweise besitzt die umlaufende Aussparung in der Innenumfangsfläche des Ventilkörpers einen rechteckigen Querschnitt. Eine solche Aussparung ist einfach und damit kostengünstig herzustellen.

In Weiterbildung der Erfindung wird vorgeschlagen, dass die umlaufende Aussparung über gerundete oder gefaste Kanten in die Innenumfangsfläche des Ventilkörpers übergeht. Die gerundeten oder gefasten Kanten stellen sicher, dass die Kanten nicht in Kontakt mit der Außenumfangsfläche des Ankers gelangen. Ferner erleichtern sie den Eintritt und Austritt von Kraftstoff in die Aussparung, um auf diese Weise die Schmierung im Lagerbereich des Ankers zu unterstützten.

Vorteilhafterweise ist die umlaufende Aussparung mittig in Bezug auf einen Ankerbewegungsraum angeordnet, der von einem oberen und einem unteren Hubanschlag begrenzt wird. Dadurch ist selbst bei einer geringen Schieflage des Ankers sichergestellt, dass der obere Lagerpunkt und der untere Lagerpunkt stets oberhalb bzw. unterhalb der Aussparung zu liegen kommen. Der Anker kann sich demnach nicht in der Aussparung verklemmen.

Bevorzugt werden der obere Hubanschlag durch den Polkern und der untere Hubanschlag durch einen ringförmigen Absatz des Ventilkörpers oder einem hieran abgestützten ringförmigen Anschlagelement gebildet. Der axiale Abstand zwischen dem Polkern und dem Absatz bzw. dem hieran abgestützten Anschlagelement definieren somit den Ankerbewegungsraum. Über das Anschlagelement kann der Verschleiß weiter reduziert werden, da dieses aus einem besonders verschleißfesten Werkstoff gefertigt und/oder gehärtet werden kann.

Des Weiteren bevorzugt ist der Anker von mindestens einer Ausgleichsbohrung durchsetzt. Die Ausgleichsbohrung ermöglicht einen Druckausgleich während der Bewegung des Ankers, indem Kraftstoff über die Ausgleichsbohrung von einer Seite auf die andere Seite des Ankers verdrängt wird. Vorzugsweise weist der Anker mehrere solcher Ausgleichsbohrungen auf, die kreisförmig und in gleichem Winkelabstand zueinander angeordnet sind, um eine möglichst gleichmäßige Ankerbewegung zu erreichen.

Um den Verschleiß im Bereich der Anschlag- und Kontaktflächen des Ankers weiter zu mindern, wird vorgeschlagen, dass der Anker einen Kontaktstift zur Kontaktierung eines Ventilstößels des Saugventils umfasst. Denn der Kontaktstift kann aus einem besonders verschleißfesten Werkstoff gefertigt und/oder gehärtet sein. Der Werkstoff des Ankers kann dann vorrangig im Hinblick auf seine magnetischen Eigenschaften gewählt werden, da hinsichtlich seiner Verschleißfestigkeit die Anforderungen nur noch gering sind.

Die ferner zur Lösung der eingangs genannten Aufgabe vorgeschlagen Hochdruckpumpe für ein Kraftstoffeinspritzsystem, insbesondere ein Common-Rail-Einspritzsystem, zeichnet sich dadurch aus, dass sie ein erfindungsgemäßes Saugventil und einen Zylinderkopf umfasst, in den vorzugsweise das Saugventil integriert ist. Auf diese Weise kann eine kompakt bauende Hochdruckpumpe geschaffen werden.

Eine bevorzugte Ausführungsform der Erfindung wird nachfolgend anhand der beigefügten Zeichnungen näher erläutert. Diese zeigen:
Fig. 1 einen schematischen Längsschnitt durch ein erfindungsgemäßes elektromagnetisch ansteuerbares Saugventil, das in eine Hochdruckpumpe integriert ist,
Fig. 2 einen schematischen Längsschnitt durch den Ventilkörper des Saugventils der Fig. 1,
Fig. 3 einen schematischen Längsschnitt durch den Ventilkörper mit hierin eingesetztem Anker, a) in einer unteren Lage, b) in einer oberen Lage,
Fig. 4 einen schematischen Längsschnitt durch den Ventilkörper mit hierin eingesetztem Anker zur Darstellung der Funktion der Aussparung als Schmiermitteldepot und
Fig. 5 einen schematischen Längsschnitt durch den Ventilkörper mit Hülse.

### Ausführliche Beschreibung der Zeichnungen

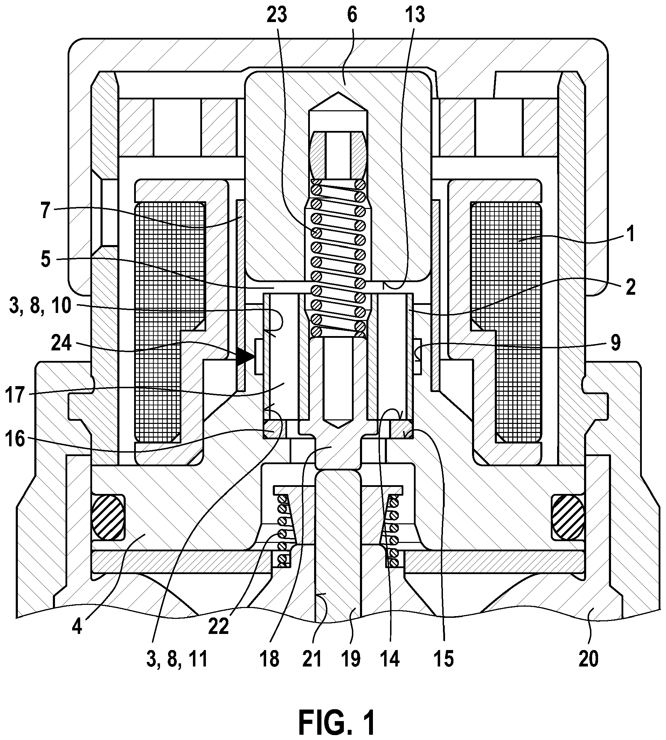

Das in der Fig. 1 dargestellte elektromagnetisch ansteuerbare Saugventil umfasst einen Ventilstößel 19, der in einer Bohrung 21 eines Zylinderkopfs 20 einer Hochdruckpumpe hubbeweglich geführt ist. Das heißt, dass das Saugventil in den Zylinderkopf 20 der Hochdruckpumpe integriert ist. Der Ventilstößel 19 ist über eine Ventilfeder 22 in Schließrichtung axial vorgespannt. Darüber hinaus wirkt auf den Ventilstößel 19 eine weitere Feder 23, die einerseits an einem Polkern 6, andererseits an einem Kontaktstift 18 abgestützt ist, der mit einem Anker 2 fest verbunden ist und der mechanischen Kopplung des Ankers 2 mit dem Ventilstößel 19 dient. Die Federkraft der weiteren Feder 23 ist größer als die der Ventilfeder 22, so dass die weitere Feder 23 das Saugventil geöffnet hält, solange eine Magnetspule 1 zur Einwirkung auf den Anker 2 unbestromt bleibt. Wird dagegen die Magnetspule 1 bestromt, bildet sich ein Magnetfeld aus, dessen Magnetkraft den Anker 2 entgegen der Federkraft der Feder 23 in Richtung des Polkerns 6 bewegt, um einen Arbeitsluftspalt 5 zwischen dem Polkern 6 und dem Anker 2 zu schließen. Dabei löst sich der Kontaktstift 18 vom Ventilstößel 19 und die Ventilfeder 22 vermag das Saugventil zu schließen. Wird die Bestromung der Magnetspule 1 beendet, werden der Anker 2 und der Kontaktstift 18 über die Federkraft der Feder 23 in ihre Ausgangslage zurückgestellt. Dabei schlägt der Kontaktstift 18 am Ventilstößel 19 an und hebt diesen aus seinem Sitz, so dass das Saugventil wieder öffnet.

Die beiden Endlagen des Ankers 2 werden durch einen oberen Hubanschlag 13 und einen unteren Hubanschlag 14 bestimmt. Der obere Hubanschlag 13 wird durch den Polkern 6 gebildet. Als unterer Hubanschlag 14 dient ein ringförmiges Anschlagelement 16, das an einem ringförmigen Absatz 15 eines Ventilkörpers 4 abgestützt ist. Der ringförmige Absatz 15 begrenzt eine zentrale Ausnehmung 3 des Ventilkörpers 4, in welcher der Anker 2 hubbeweglich aufgenommen und geführt ist. Die Führung des Ankers 2 erfolgt über eine Innenumfangsfläche 8 des Ventilkörpers 4, die eine umlaufende Aussparung 9 aufweist, welche die Innenumfangsfläche 8 in einen oberen Führungsbereich 10 und einen unteren Führungsbereich 11 unterteilt.

Im Bereich der Aussparung 9 ist über eine Schweißnaht 24 eine Hülse 7 mit dem Ventilkörper 4 verbunden. Die Schweißnaht 24 ist auf Höhe der Aussparung 9 angeordnet, so dass sie keinen Einfluss auf den oberen oder unteren Führungsbereich 10, 11 zur Führung des Ankers 2 hat. Der Hub des Ankers 2 wird demnach durch die Schweißnaht 24 nicht beeinträchtigt. Um kurze Schaltzeiten zu ermöglichen, weist der Anker 2 zudem mehrere, dezentral angeordnete Ausgleichsbohrungen 17 auf, die den Anker 2 durchsetzen. Bei einem Hub des Ankers 2 vermag über die Ausgleichsbohrungen 17 Kraftstoff von oben nach unten bzw. umgekehrt zu strömen, um den erforderlichen Druckausgleich zu bewirken.

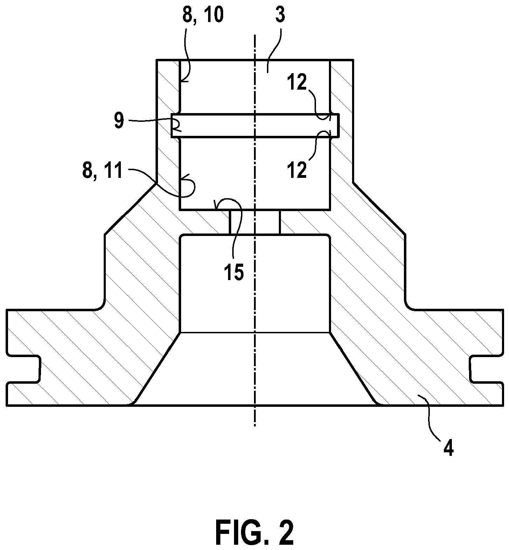

In der Fig. 2 ist der Ventilkörper 4 des Saugventils der Fig. 1 vergrößert dargestellt. Die zentrale Ausnehmung 3 zur Aufnahme und Führung des Ankers 2 wird in radialer Richtung von der Innenumfangsfläche 8 und in axialer Richtung von dem ringförmigen Absatz 15 begrenzt. Auf die Darstellung des Anschlagelements 16 und den Anker 2 wurde vorliegend der Deutlichkeit halber verzichtet. Die Innenumfangsfläche 8 wird von der umlaufenden Aussparung 9 in den oberen und den unteren Führungsbereich 10, 11 unterteilt. Die Lage der Aussparung 9 in axialer Richtung ist mittig in Bezug auf den Ankerbewegungsraum gewählt, der durch den oberen und den unteren Hubanschlag 13, 14 (siehe Fig. 1) vorgegeben ist. Dadurch ist sichergestellt, dass die Aussparung 9 in ausreichendem Abstand zu einem oberen und einem unteren Lagerpunkt 25, 26 des Ankers 2 angeordnet ist.

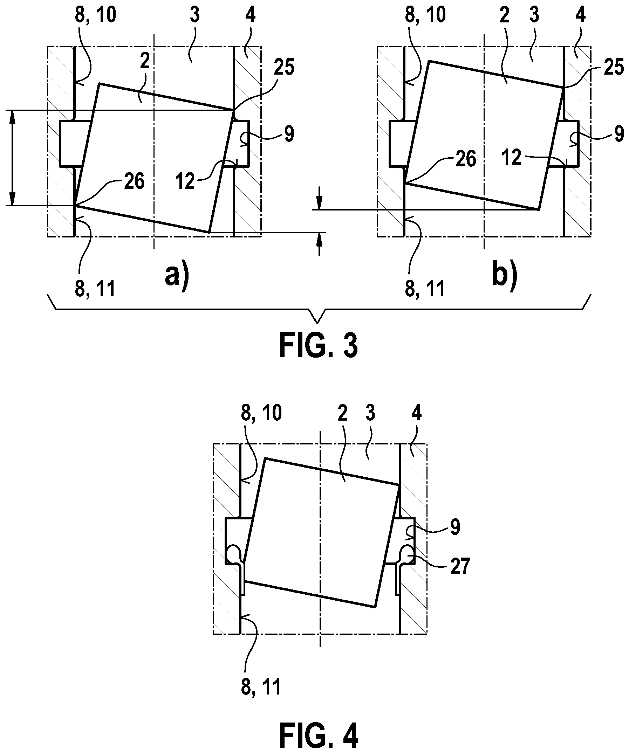

Wie in der Fig. 3a) und b) dargestellt, wandern die Lagerpunkte 25, 26 mit dem Hub des Ankers 2. Der obere Lagerpunkt 25 befindet sich jedoch stets oberhalb der Aussparung 9 und der untere Lagerpunkt 26 befindet sich stets unterhalb der Aussparung 9. Dadurch ist sichergestellt, dass sich der Anker 2, insbesondere in Schräglage, nicht innerhalb der Aussparung 9 verklemmt. Ferner weist die Aussparung 9 gerundete Kanten 12 auf, so dass sichergestellt ist, dass der Führungsdurchmesser der zentralen Ausnehmung 3 des Ventilkörpers 4 nicht eingeschränkt wird.

Die gerundeten Kanten 12 fördern zudem die Aufnahme von Kraftstoff 27, so dass die Aussparung 9 zugleich als Schmiermitteldepot dient. Dies ist schematisch in der Fig. 4 dargestellt.

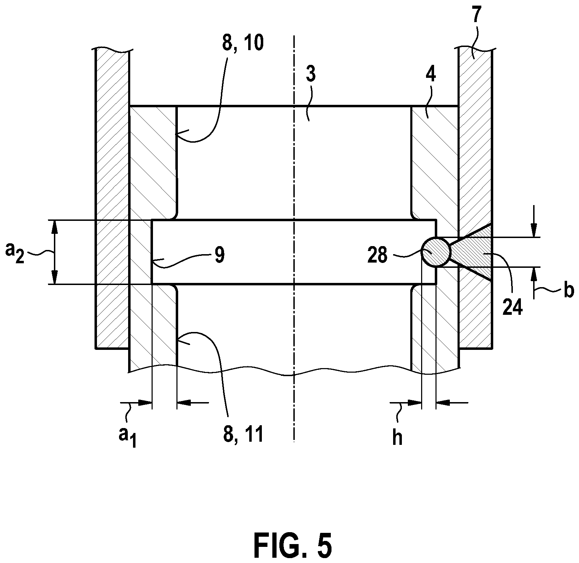

Wie in der Fig. 5 dargstellt, kann die Abmessung der umlaufenden Aussparung 9 so gewählt werden, dass die Schweißnaht 24 keinen Einfluss auf die Führung des Ankers 2 hat. In radialer Richtung ist hierzu die Abmessung a₁ größer als die Höhe h eines Schweißnahtaufwurfs 28 gewählt. Die Abmessung a₂ in axialer Richtung ist ferner größer als die maximale Einflussbreite b der Schweißnaht 24 gewählt.

## Patentansprüche

1. Elektromagnetisch ansteuerbares Saugventil für eine Hochdruckpumpe eines Kraftstoffeinspritzsystems, insbesondere eines Common-Rail-Einspritzsystems, umfassend eine Magnetspule (1) zur Einwirkung auf einen Anker (2), der in einer zentralen Ausnehmung (3) eines Ventilkörpers (4) hubbeweglich aufgenommen und geführt ist, wobei dem Anker (2) an einem Arbeitsluftspalt (5) ein Polkern (6) gegenüberliegt, der über eine Hülse (7) mit dem Ventilkörper (4) verbunden ist,
**dadurch gekennzeichnet, dass** der Ventilkörper (4) innerhalb einer die Ausnehmung (3) begrenzenden Innenumfangsfläche (8) eine umlaufende Aussparung (9) aufweist, welche die Innenumfangsfläche (8) in einen oberen und einen unteren Führungsbereich (10,11) unterteilt, wobei auf Höhe der umlaufenden Aussparung (9) die Hülse (7) mit dem Ventilkörper (4) verschweißt ist.

2. Saugventil nach Anspruch 1 ,
**dadurch gekennzeichnet, dass** die umlaufende Aussparung (9) als Ringnut ausgebildet ist, deren Querschnittsabmessung in axialer Richtung größer als in radialer Richtung ist.

3. Saugventil nach einem der vorhergehenden Ansprüche,
**dadurch gekennzeichnet, dass** die umlaufende Aussparung (9) einen rechteckigen Querschnitt besitzt.

4. Saugventil nach einem der vorhergehenden Ansprüche,
**dadurch gekennzeichnet, dass** die umlaufende Aussparung (9) über gerundete oder gefaste Kanten (12) in die Innenumfangsfläche (8) übergeht.

5. Saugventil nach einem der vorhergehenden Ansprüche,
**dadurch gekennzeichnet, dass** die umlaufende Aussparung (9) mittig in Bezug auf einen Ankerbewegungsraum angeordnet ist, der von einem oberen und einem unteren Hubanschlag (13, 14) für den Anker (2) begrenzt wird.

6. Saugventil nach Anspruch 5,
**dadurch gekennzeichnet, dass** der obere Hubanschlag (13) durch den Polkern (6) und der untere Hubanschlag (14) durch einen ringförmigen Absatz (15) des Ventilkörpers (4) oder einem hieran abgestützten ringförmigen Anschlagelement (16) gebildet werden.

7. Saugventil nach einem der vorhergehenden Ansprüche,
**dadurch gekennzeichnet, dass** der Anker (2) von mindestens einer Ausgleichsbohrung (17) durchsetzt ist.

8. Saugventil nach einem der vorhergehenden Ansprüche,
**dadurch gekennzeichnet, dass** der Anker (2) einen Kontaktstift (18) zur Kontaktierung eines Ventilstößels (19) des Saugventils umfasst.

9. Hochdruckpumpe für ein Kraftstoffeinspritzsystem, insbesondere ein Common-Rail-Einspritzsystem, mit einem Saugventil nach einem der vorhergehenden Ansprüche und einem Zylinderkopf (20), in den vorzugsweise das Saugventil integriert ist.

## Claims

1. Electromagnetically actuable suction valve for a high pressure pump of a fuel injection system, in particular of a common rail injection system, comprising a magnet coil (1) for acting on an armature (2) which is received and guided such that it can be moved with a reciprocating movement in a central recess (3) of a valve body (4), a pole core (6) which is connected via a sleeve (7) to the valve body (4) lying opposite the armature (2) at a working air gap (5), **characterized in that** the valve body (4) has a circumferential cutout (9) within an inner circumferential face (8) which delimits the recess (3), which cutout (9) divides the inner circumferential face (8) into an upper and a lower guide region (10, 11), wherein the sleeve (7) is welded to the valve body (4) at the level of the circumferential cutout (9).

2. Suction valve according to Claim 1, **characterized in that** the circumferential cutout (9) is configured as an annular groove, the cross-sectional dimension of which is greater in the axial direction than in the radial direction.

3. Suction valve according to either of the preceding claims, **characterized in that** the circumferential cutout (9) has a rectangular cross section.

4. Suction valve according to one of the preceding claims, **characterized in that** the circumferential cutout (9) merges via rounded or beveled edges (12) into the inner circumferential face (8).

5. Suction valve according to one of the preceding claims, **characterized in that** the circumferential cutout (9) is arranged centrally in relation to an armature movement space which is delimited by an upper and a lower stroke stop (13, 14) for the armature (2).

6. Suction valve according to Claim 5, **characterized in that** the upper stroke stop (13) is formed by way of the pole core (6), and the lower stroke stop (14) is formed by way of an annular shoulder (15) of the valve body (4) or an annular stop element (16) which is supported thereon.

7. Suction valve according to one of the preceding claims, **characterized in that** the armature (2) is penetrated by at least one equalizing bore (17).

8. Suction valve according to one of the preceding claims, **characterized in that** the armature (2) comprises a contact pin (18) for making contact with a valve tappet (19) of the suction valve.

9. High pressure pump for a fuel injection system, in particular a common rail injection system, having a suction valve according to one of the preceding claims and a cylinder head (20), into which the suction valve is preferably integrated.

## Revendications

1. Soupape d'aspiration à commande électromagnétique pour une pompe à haute pression d'un système d'injection de carburant, en particulier d'un système d'injection à rampe commune, comprenant une bobine magnétique (1) destinée à agir sur un induit (2) qui est reçu et guidé avec une course de déplacement dans un évidement central (3) d'un corps de soupape (4), un noyau polaire (6) étant opposé à l'induit (2) au niveau d'un entrefer de travail (5), lequel noyau polaire est connecté au corps de soupape (4) par le biais d'une douille (7),
**caractérisée en ce que** le corps de soupape (4) présente, à l'intérieur d'une surface périphérique interne (8) délimitant l'évidement (3), une ouverture périphérique (9) qui divise la surface périphérique interne (8) en une région de guidage supérieure et une région de guidage inférieure (10, 11), la douille (7) étant soudée au corps de soupape (4) à la hauteur de l'ouverture périphérique (9).

2. Soupape d'aspiration selon la revendication 1,
**caractérisée en ce que** l'ouverture périphérique (9) est réalisée sous forme de rainure annulaire dont les dimensions en section transversale sont plus grandes dans la direction axiale que dans la direction radiale.

3. Soupape d'aspiration selon l'une quelconque des revendications précédentes,
**caractérisée en ce que** l'ouverture périphérique (9) présente une section transversale rectangulaire.

4. Soupape d'aspiration selon l'une quelconque des revendications précédentes,
**caractérisée en ce que** l'ouverture périphérique (9) se prolonge par la surface périphérique interne (8) par le biais d'arêtes arrondies ou biseautées (12).

5. Soupape d'aspiration selon l'une quelconque des revendications précédentes,
**caractérisée en ce que** l'ouverture périphérique (9) est disposée centralement par rapport à un espace de déplacement de l'induit qui est limité par une butée de fin de course supérieure et une butée de fin de course inférieure (13, 14) pour l'induit (2).

6. Soupape d'aspiration selon la revendication 5,
**caractérisée en ce que** la butée de fin de course supérieure (13) est formée par le noyau polaire (6) et la butée de fin de course inférieure (14) est formée par un épaulement annulaire (15) du corps de soupape (4) ou par un élément de butée annulaire (16) supporté contre celui-ci.

7. Soupape d'aspiration selon l'une quelconque des revendications précédentes,
**caractérisée en ce que** l'induit (2) est traversé par au moins un alésage d'équilibrage (17).

8. Soupape d'aspiration selon l'une quelconque des revendications précédentes,
**caractérisée en ce que** l'induit (2) comprend une broche de contact (18) destinée à venir en contact avec un poussoir de soupape (19) de la soupape d'aspiration.

9. Pompe à haute pression pour un système d'injection de carburant, en particulier un système d'injection à rampe commune, comprenant une soupape d'aspiration selon l'une quelconque des revendications précédentes et une culasse (20) dans laquelle est intégrée de préférence la soupape d'aspiration.
